# EUROPÄISCHE PATENTSCHRIFT

(11) **EP 1 911 986 B1**
(45) Veröffentlichungstag und Bekanntmachung des Hinweises auf die Patenterteilung: **15.07.2009**
(21) Anmeldenummer: 07018884.2
(22) Anmeldetag: 26.09.2007
(51) Int. Cl.: F16C 33/10

(54) **Hydrodynamisches Gleitlager**
Hydrodynamic bearing
Palier lisse hydrodynamique

(30) Priorität: 13.10.2006 DE 102006050246
(43) Veröffentlichungstag der Anmeldung: 16.04.2008
(73) Patentinhaber: KS Gleitlager GmbH, 68789 St. Leon-Rot (DE)
(72) Erfinder: Fiedler, Dirk, Dipl.-Ing., 26871 Papenburg (DE); Rhauderwiek, Jakob, 26810 Westoverledingen (DE)
(74) Vertreter: Friz, Oliver

(56) Entgegenhaltungen:
- US-A- 6 082 904
- US-A- 6 089 756

## Beschreibung

Die Erfindung betrifft ein hydrodynamisches Gleitlager als Lagerbuchse oder Lagerschale, mit einer metallischen Trägerschicht, insbesondere aus Stahl, und einer auf die dem Gleitpartner zugewandte Seite der Trägerschicht aufgebrachten metallischen Gleitschicht, wobei die Gleitschicht auf der der Trägerschicht abgewandten und dem Gleitpartner zugewandten Seite eine im wesentlichen in Umfangsrichtung erstreckte Mikrorillenstruktur mit ersten Rillen einer ersten Tiefe und zweiten Rillen einer zweiten Tiefe aufweist, in welche ein zwischen Gleitlager und Gleitpartner befindliches fluides hydrodynamisches Schmiermedium eindringen kann.

Derartige Gleitlager werden beispielsweise für motorische oder motorennahe Anwendungen eingesetzt, beispielsweise als Pleuellagerschale oder Hauptlagerschale eines Verbrennungsmotors, aber auch als Gleitlager in Hochdruckeinspritzpumpen oder Kompressoren. Wenn vorstehend von einem hydrodynamischen Gleitlager oder einer hydrodynamischen Medienschmierung die Rede ist, so wird hierunter nicht lediglich eine Initialschmierung bei einem Gleitlager oder einer aus Gleitlager und Gleitpartner bestehenden Lagerstelle verstanden, sondern vielmehr ein Gleitlager oder eine Lagerstelle, welches bzw. welche im Betrieb kontinuierlich mit einem unter Druck stehendem fluiden Schmiermedium beaufschlagt wird. Bei derartigen hydrodynamischen Gleitlagern wurde bereits der Vorschlag unterbreitet, in der dem Gleitpartner zugewandten Oberfläche des Gleitlagers eine Mikrorillenstruktur vorzusehen, welche das fluide hydrodynamische Schmiermedium aufnehmen und halten sowie gegebenenfalls führen kann. So wurde beispielsweise mit US 6,082,904 vorgeschlagen, außerhalb eines Hauptlastbereichs einer Lagerstelle in Umfangsrichtung erstreckte Mikrorillen vorzusehen, die jedoch einen Umfangsabschnitt, nämlich den genannten Hauptlastbereich zumindest teilweise ausnehmen. Hierdurch sollte erreicht werden, dass infolge der Umdrehung des wellenförmigen Gleitpartners gegenüber dem zylindrischen Gleitlager das im Schmierspalt befindliche Schmiermedium aus den Rillen heraus in den rillenlosen Hauptlastbereich hineingedrückt wird.

Die Anmelderin hat jedoch festgestellt, dass eine derartige Ausbildung eines hydrodynamischen Gleitlagers nicht optimal ist, da in einem solchenfalls im wesentlichen rillenlosen Hauptlastbereich trotz des hydrodynamischen Drucks nicht immer eine hinreichende Menge von fluidem Schmiermedium vorhanden ist, da gerade im Hauptlastbereich das Schmiermedium bei flächenhaft gegeneinander anliegenden Gleitpartnern aus dem Schmierspalt verdrängt wird.

Mit der gattungsbildenden US 6,089,756 wurde bereits eine Mikrorillenstruktur mit ersten und zweiten unterschiedlich tiefen Rillen bereitgestellt, die sich beide gleichförmig über die gesamte Umfangsrichtung, also auch über den Hauptlastbereich einer aus zylindrischem Gleitlager und wellenförmigem Gleitpartner gebildeten Lagerstelle erstrecken. Es zeigte sich jedoch, dass bei dieser Ausbildung der Traganteil im Hauptlastbereich bei starker Belastung der Lagerstelle nicht hinreichend ist und dass infolge der tieferen Rillen ein den Anforderungen entsprechender hydrodynamischer Druck des fluiden Schmiermediums nicht in hinreichendem Maße aufgebracht werden kann.

Der vorliegenden Erfindung liegt die Aufgabe zugrunde, ein hydrodynamisches Gleitlager zu schaffen, welches hohen Belastungen standzuhalten vermag und dennoch auf wirtschaftliche Weise herstellbar ist.

Diese Aufgabe wird bei einem hydrodynamischen Gleitlager der eingangs genannten Art erfindungsgemäß dadurch gelöst, dass dass die Mikrorillenstruktur über im wesentlichen die gesamte axiale Breite und über im wesentlichen die gesamte Umfangslänge erste Rillen einer ersten geringen Tiefe von 1 - 5 µm aufweist und dass der durch die ersten Rillen gebildeten Struktur zweite Rillen einer maximalen Tiefe von 4 - 40 µm überlagert sind, wobei diese maximale Tiefe wenigstens 2 µm größer ist als die erste Tiefe der ersten Rillen, und dass die Tiefe der zweiten Rillen in der Umfangsrichtung zwischen der maximalen Tiefe und einer Tiefe variiert, die höchstens 20 % der maximalen Tiefe beträgt.

Dadurch, dass die Mikrorillenstruktur der ersten Rillen mit einer nur geringen Tiefe von 1 - 5 µm, insbesondere von 1 - 4 µm, sich vorzugsweise mit konstanter Tiefe über die gesamte Umfangsrichtung, also auch über einen Hauptlastbereich des Gleitlagers, erstreckt, kann auch in stärker belasteten Bereichen, wie insbesondere dem Hauptlastbereich des Gleitlagers, ein Aufnahmeraum für fluide Schmiermedien in Form der Vertiefungen dieser ersten Rillen geschaffen werden. Es kann dann mehr Schmiermedium zwischen den Gleitpartnern, also zwischen Gleitlager und Gleitpartner, gespeichert werden, als dies bei im wesentlichen planen oder exakt konzentrischen Oberflächen der Gleitpartner möglich wäre.

Durch Variieren der Tiefe der zweiten Rillen in der Umfangsrichtung lässt sich infolge der Relativbewegung der Gleitpartner in Richtung abnehmender Rillentiefe sehr effektiv ein hydrodynamischer Druck des fluiden Schmiermediums aufbauen. Die maximale Tiefe der zweiten Rillen beträgt vorzugsweise 4 - 30 µm, insbesondere von 4 - 20 µm, insbesondere 6 - 18 µm und weiter insbesondere 6 - 15 µm.

Bei einer bevorzugten Ausführungsform des erfindungsgemäßen hydrodynamischen Gleitlagers ist die Mikrorillenstruktur derart, dass der Abstand von tiefster Stelle zu tiefster Stelle von benachbarten ersten Rillen 0,1 - 0,5 mm, insbesondere 0,1 - 0,4 mm, insbesondere 0,1 - 0,3 mm und weiter insbesondere 0,15 - 0,3 mm beträgt. Die ersten Rillen gehen quasi unmittelbar ineinander über, so dass ihre Breite (also wiederum in axialer Richtung des Gleitlagers betrachtet) ebenfalls innerhalb der vorstehenden Bereiche liegt.

Der Abstand der zweiten Rillen voneinander, von tiefster Stelle zu tiefster Stelle von benachbarten zweiten Rillen gemessen, beträgt 0,8 - 5 mm, insbesondere 0,8 - 4 mm, insbesondere 1 - 4 mm. Bei den zweiten tiefen Rillen liegt die maximale Bereite bei 0,3 - 1 mm (wiederum in axialer Richtung des Gleitlagers betrachtet).

Die genannte Variierung der Tiefe der zweiten Rillen ist vorzugsweise derart, dass sie in der Umfangsrichtung zwischen der maximalen Tiefe und einer Tiefe variiert, die höchstens 10 % und weiter insbesondere höchstens 5 % der maximalen Tiefe beträgt. Die Tiefe der zweiten Rillen kann in der Umfangsrichtung auch bis auf wenigstens nahezu Null abnehmen. Hierdurch wird ein besonders hoher hydrodynamischer Druck auf den daran in Umfangsrichtung anschließenden Lagerbereich erzeugt. Infolge der in Umfangsrichtung und über im wesentlichen die gesamte axiale Breite erstreckten Struktur der ersten Rillen einer ersten geringeren Tiefe wird erreicht, dass genug Schmiermedium auch in Bereichen minimaler Spaltdicke, also insbesondere in Hochlastbereichen der Lagerstelle vorhanden ist. Durch das Zusammenwirken der sich in Richtung der Relativbewegung der Gleitpartner verringernden Tiefe der zweiten Rillen in Verbindung mit der in Umfangsrichtung durchgehenden Struktur der ersten Rillen wird einerseits erreicht, dass ein hoher hydrodynamischer Druck in kritischen Bereichen der Lagerstelle aufgebaut wird, der hinreichende Mengen fluiden Schmiermediums in kritischen Bereichen zur Verfügung stellt, und andererseits wird erreicht, dass auch bei höchster Belastung genug Schmiermedium in den ersten Rillen gespeichert werden kann. Erst hierdurch ergibt sich ein für hohe Belastungen geeignetes Gleitlager.

Die in Umfangsrichtung variierende Tiefe der zweiten Rillen nimmt bei einer bevorzugten Ausführungsform in der Umfangsrichtung an ein oder zwei Umfangsbereichen ein Minimum ein. Des weiteren erweist es sich nach den vorausgegangenen Ausführungen als vorteilhaft, dass derjenige Umfangsbereich, in dem die Tiefe der zweiten Rillen ein Minimum aufweist, in einem Hauptlastbereich des Gleitlagers liegt, in welchem ein hydrodynamisch geschmierter Spalt zwischen Gleitlager und Gleitpartner minimal ist. Ein solcher Hauptlastbereich ergibt sich infolge der Geometrie beispielsweise bei Pleuelanwendungen zwangsläufig; er ist dort infolge der periodischen stets gleichbleibenden Druckverhältnisse sehr gut lokalisierbar. Es lässt sich somit ein für bestimmte Einsatzzwecke optimiertes Gleitlager fertigen.

Gegenstand der Erfindung ist auch ein hydrodynamisches Gleitlager der vorausgehend beschriebenen Art, das dadurch hergestellt ist, dass das Gleitlager zur Herstellung der ersten Rillen einer ersten spindelnden Bearbeitung unterzogen wird, wobei eine eine Werkzeugschneide tragende Bohrstange in einer axialen Längsmittelachse des Gleitlagers (z-Achse) bewegt wird, und dass zur Herstellung der zweiten Rillen die Bohrstange senkrecht zur Längsmittelachse (x,y-Achse) um die maximale Tiefe der zweiten Rillen verstellt wird und das Gleitlager sodann in dieser Stellung der Bohrstange einer zweiten spindelnden Bearbeitung unterzogen wird. Die Geometrie eines derartigen Gleitlagers ist durch diese Art der Herstellung eindeutig vorbestimmt. Es ist ohne weiteres ersichtlich, dass infolge des rotatorischen Antriebs der Bohrstange um eine während der spindelnden Bearbeitung feststehende z-Achse wegen der zuvor durchgeführten Verstellung in x- oder y-Richtung die Geometrie der durch die zweiten Rillen gegebenen Teilrillenstruktur vorgegeben ist.

Es sei an dieser Stelle auch erwähnt, dass es sich als höchst vorteilhaft auswirkt, dass solchenfalls ein stetiger Verlauf der zweiten Rillen und der Rillentiefe der zweiten Rillen realisiert wird. Auf diese Weise ist auch das Auftreten kavitativer Effekte weitgehend minimiert. In diesem Zusammenhang wirkt es sich als höchst vorteilhaft aus, wenn der Tiefenverlauf der zweiten Rillen im mathematischen Sinne stetig verläuft, also keine Knicke aufweist (ausgenommen hiervon ist die nur theoretisch ermittelbare Unstetigkeit, die sich nach dem vorstehenden Verfahren zwangsläufig dann ergibt, wenn die Tiefe bis auf Null reduziert wird).

Des weiteren ist Gegenstand der vorliegenden Erfindung eine hydrodynamisch mediengeschmierte Lagerstelle umfassend ein Gleitlager nach einem oder mehreren der Ansprüche 1-12 und einen wellenförmigen Gleitpartner, wobei das Gleitlager den wellenförmigen Gleitpartner im wesentlichen konzentrisch umgibt.

Weitere Merkmale, Einzelheiten und Vorteile der Erfindung ergeben sich aus den beigefügten Patentansprüchen und der zeichnerischen Darstellung und nachfolgenden Beschreibung bevorzugter Ausführungsform der Erfindung.

In der Zeichnung zeigt:
- Figur 1: eine Schnittansicht durch einen Bereich maximaler Rillentiefe einer eine Gleitlagerschale umfassenden erfindungsgemäßen Gleitlagers mit in radialer Richtung liegender Schnittebene;
- Figur 2: eine Schnittansicht der Gleitlagerschale nach Figur 1 mit einer die Umfangsrichtung einschließenden Schnittebene;
- Figuren 3 bis 5: Figur 2 entsprechende Schnittansichten dreier weiterer Ausführungsformen von erfindungsgemäßen Gleitlagerschalen;
- Figur 6: eine Schnittansicht mit in radialer Richtung liegender Schnittebene der Gleitlagerschalen nach Figuren 3 bis 5 (Schnittebene VI-VI) und
- Figur 7: eine Schnittansicht einer Lagerstelle aus zwei Gleitlagerschalen und einer Welle als Gleitpartner (schematisch).

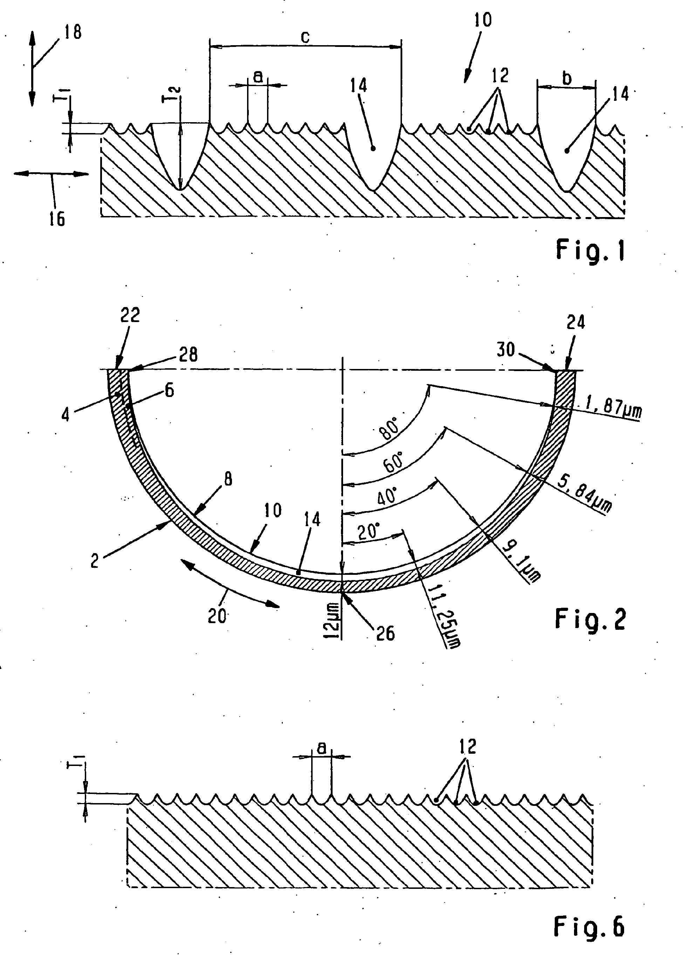

Figur 2 zeigt eine erfindungsgemäße Gleitlagerschale 2, beispielsweise ein Pleuel eines Kraftfahrzeugmotors, wobei im Betrieb der Lagerstelle zwei Gleitlagerschalen mit ihren Trennebenen im wesentlichen wenigstens nahezu aneinander anliegen und so einen wellenartigen Gleitpartner, beispielsweise einen Zapfen einer Kurbelwelle, aufzunehmen vermögen. Die Gleitlagerschale 2 umfasst eine metallische Trägerschicht 4, vorzugsweise aus Stahl, welche einen einem nicht dargestellten Gehäuse zugewandten Rücken der Lagerschale bildet. Auf diese Trägerschicht 4 ist radial innen eine metallische Gleitschicht 6 aus Aluminiumbasis-und/oder Kupferbasis-Gleitlagerlegierungen aufgebracht. Diese Gleitschicht 6, gegebenenfalls überzogen mit einer galvanischen Beschichtung oder einer aufgesputterten (PVD) Beschichtung oder einem Gleitlack auf Polymerbasis, bildet die mit dem wellenförmigen Gleitpartner tribologisch zusammenwirkende Gleitfläche 8. Die Gleitfläche 8 der metallischen Gleitschicht 6 ist mit einer erfindungsgemäßen Mikrorillenstruktur 10 ausgebildet. Die Mikrorillenstruktur 10 umfasst erste Rillen 12 einer ersten geringen Tiefe T₁ und zweite Rillen 14 einer demgegenüber größeren maximalen Tiefe T₂.

Die ersten Rillen 12 sind im beispielhaft und bevorzugtermaßen dargestellten Fall unmittelbar aneinander angrenzend. Die Geometrie der dargestellten Rillen 12 ergibt sich in vorteilhafter Weise aus der Geometrie des verwandten Schneidwerkzeugs. Die dargestellten Vertiefungen haben vorzugsweise im Scheitel 16 eine verrundete Gestalt.

Die aus Figur 2 ersichtliche Breite a der ersten Rillen 12 beträgt im bevorzugten Fall 0,15-0,3 mm. Die entsprechende maximale Breite b der zweiten Rillen 14 beträgt im bevorzugten Fall 0,3 - 1 mm. Der Abstand c gemessen von tiefster Stelle zu tiefster Stelle oder wie in Figur 2 dargestellt, von entsprechendem Seitenrand zu entsprechendem Seitenrand benachbarter zweiter Rillen 14, beträgt 1 - 4 mm. Es ergibt sich somit eine Anordnung von ersten Rillen 12 und zweiten Rillen 14 der beispielhaft in Figur 2 dargestellten Art. Es sei jedoch ausdrücklich darauf hingewiesen, dass die Skalierung bei der Darstellung der ersten und zweiten Rillen 12, 14 weder in axialer Richtung 16 noch in radialer Richtung 18 übereinstimmt.

Die erste Tiefe T₁ der ersten Rillen 12 beträgt zwischen 1 - 4 µm, und der maximale Wert der Tiefe T₂ der zweiten Rillen 14 beträgt zwischen 6 - 20 µm.

Die aus Figur 2 nicht ersichtlichen ersten Rillen 12 erstrecken sich in der Umfangsrichtung 20 durchgehend von Trennfläche 22 zu Trennfläche 24 der Gleitlagerschale 2, bzw. in Umfangsrichtung 20 durchgehend, wenn zwei Gleitlagerschalen 2 ein zylindrisches Gleitlager bilden. Da die Mikrorillenstruktur 10 durch eine spindelnde Bearbeitung der Gleitfläche 8 hergestellt ist, erstrecken sich die ersten und die zweiten Rillen 12, 14 geringfügigst spiralförmig, was der guten Ordnung halber angemerkt sei; aufgrund der geringen Ganghöhe wird jedoch gleichwohl von in Umfangsrichtung 20 erstreckten oder verlaufenden Rillen 12, 14 gesprochen.

Die ersten Rillen 12 haben entlang ihrer Erstreckung in Umfangsrichtung 20 eine konstante Tiefe T₁, und sie erstrecken sich - wie bereits ausgeführt - in Umfangsrichtung 20 durchgehend; es gibt also keine "rillenfreien" Bereiche der Gleitfläche 8.

Im Unterschied hierzu haben die zweiten Rillen 14 eine in Umfangsrichtung 20 variierende Tiefe T₂. Dies ist in der Figur 2 schematisch und stark übertrieben angedeutet. Bei dem Ausführungsbeispiel nach Figur 2 ist die Tiefe T₂ der zweiten Rillen 14 im Scheitel 26 der Gleitlagerschale 2 maximal. Sie beträgt dort 12 µm und fällt dann beidseits in Umfangsrichtung 20 bis auf wenigstens nahezu Null ab. Der sich ergebende Verlauf der Tiefe T₂ ist in Figur 2 dargestellt. Somit umfasst die Gleitlagerschale 2 zwei Umfangsbereiche 28, 30, an denen die Tiefe T₂ der zweiten Rillen 14 ein Minimum aufweist.

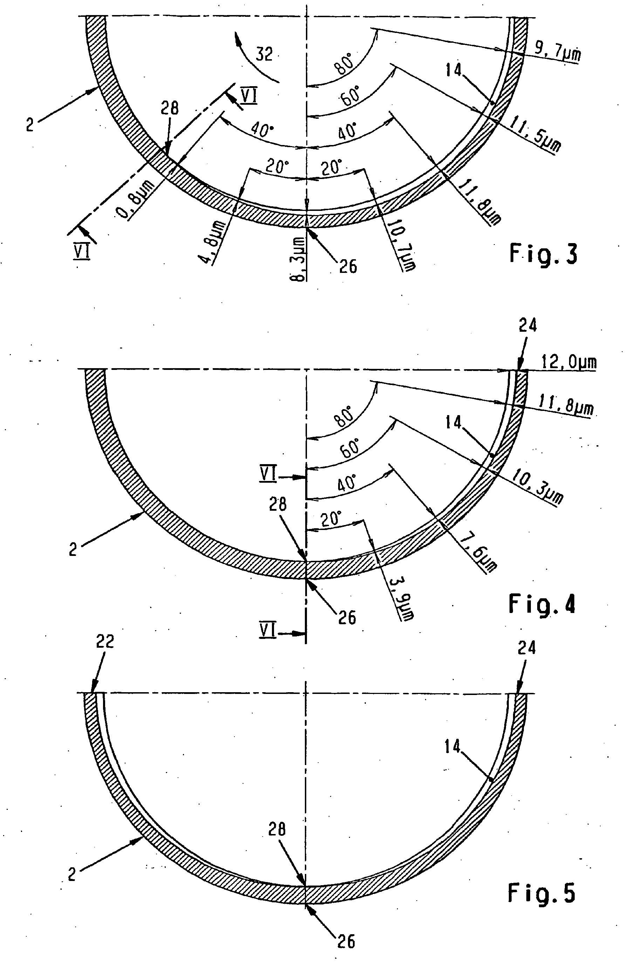

Bei der Ausführungsform nach Figur 3 liegt der maximale Wert der Tiefe T₂ der zweiten Rillen 14 ausgehend vom Scheitel 26 der Gleitlagerschale 2 bei etwa 45° entgegen der Uhrzeigerrichtung. Entsprechend liegt ein Bereich 28 minimaler Tiefe ausgehend vom Scheitel 26 bei ca. 45° in Uhrzeigerrichtung. Bei einer derartigen Ausbildung könnte dieser Bereich 28 einen Hauptlastbereich des Gleitlagers darstellen. Wenn ein nicht dargestellter wellenförmiger Gleitpartner in Uhrzeigerrichtung 32 gegen die Gleitlagerschale 2 läuft, so wird hydrodynamisches fluides Schmiermedium, welches sich im Spalt zwischen Gleitlagerschale und wellenförmigem Gleitpartner sowie in den Vertiefungen der ersten und zweiten Rillen 12, 14 befindet, ebenfalls in Uhrzeigerrichtung 32 zu dem Bereich 28 hin gedrückt. Es entsteht ein hoher dynamischer Druck infolge des sich in Uhrzeigerrichtung 32 verjüngenden Querschnitts der zweiten Rillen 14. Dies führt zu einer optimalen Schmierung in dem Hauptlastbereich. Auch wenn die Tiefe T₂ der zweiten Rillen 14 in dem Bereich 28 zumindest wenigstens auf nahezu Null reduziert ist, wird durch die aus Figur 3 wiederum nicht ersichtlichen ersten Rillen 12 sichergestellt, dass auch bei extremen Belastungen eine hinreichende Menge von fluidem Schmiermedium zwischen Gleitlagerschale 2 und Gleitpartner gespeichert wird.

Figur 6 zeigt einen Figur 2 entsprechenden radialen Schnitt in dem Bereich 28, in dem keine zweiten Rillen 14 mehr vorgesehen sind, bzw. deren Tiefe T₂ auf wenigstens nahezu Null reduziert ist.

Figur 4 zeigt eine weitere Ausführungsform einer Gleitlagerschale 2, bei der der Tiefenverlauf der zweiten Rillen 14 derart ist, dass im Scheitel 26 der Bereich 28 minimaler Tiefe der zweiten Rillen 14 vorgesehen ist. Im Bereich der einen Trennfläche 24 ist die maximale Tiefe von beispielhaft 12 µm vorgesehen.

Bei der Ausführungsform nach Figur 5 ist wiederum im Scheitel 26 der Gleitlagerschale 2 der Bereich 28 minimaler Tiefe der zweiten Rillen 14 vorgesehen, jedoch im Unterschied zur Ausführungsform nach Figur 4 ist beidseits im Bereich beider Trennflächen 22, 24 die Tiefe T₂ der zweiten Rillen 14 maximal.

Die aus Figuren 1 bis 6 dargestellten Gleitlager, bzw. Gleitlagerschalen lassen sich herstellen, indem sie in einer geeigneten Vorrichtung ausgespindelt werden. Hierfür kann in vorteilhafter Weise eine nicht dargestellte Bohrstange verwendet werden, die wenigstens eine radial vorstehende Werkzeugschneide aufweist. In einer ersten spindelnden Bearbeitung können beispielsweise mit einer Vorschubgeschwindigkeit von 0,2 mm/Umdrehung die ersten Rillen 12 in der Gleitfläche 8 ausgebildet werden, so dass in axialer Richtung 16 sowie in Umfangsrichtung 20 durchgehend die aus Figur 6 ersichtliche Mikrorillenstruktur 10 mit (nur) ersten Rillen 12 ausgebildet wird. In einer zweiten spindelnden Bearbeitung können in vorteilhafter Weise unter Verwendung desselben Werkzeugs die zweiten tieferen Rillen 14 mit der in Umfangsrichtung 20 variierenden Rillentiefe T₂ ausgebildet werden. Hierzu wird die Bohrspindel senkrecht zur axialen Richtung 16 (senkrecht zur z-Richtung), also in x- und/oder y-Richtung, um den maximalen Wert der Tiefe T₂ der zweiten Rillen 14 versetzt, und es wird dann eine weitere spindelnde Bearbeitung, jedoch mit einer je Umdrehung erheblich größeren Vorschubgeschwindigkeit von beispielsweise 2 mm/Umdrehung ausgeführt.

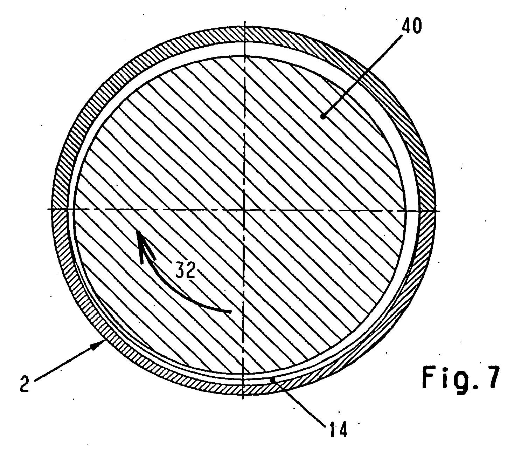

Schließlich zeigt Figur 7 eine Schnittansicht einer Lagerstelle aus zwei Gleitlagerschalen 2, die mit ihren Trennflächen gegeneinander anliegen, und einer Welle 40 als Gleitpartner. Schematisch ersichtlich ist bei der einen Lagerschale der Tiefenverlauf der zweiten Rillen 14.

## Patentansprüche

1. Hydrodynamisches Gleitlager als Lagerbuchse oder Lagerschale (2), mit einer metallischen Trägerschicht (4), insbesondere aus Stahl, und einer auf die dem Gleitpartner zugewandte Seite der Trägerschicht aufgebrachten metallischen Gleitschicht (6), wobei die Gleitschicht (6) auf der der Trägerschicht (4) abgewandten und dem Gleitpartner zugewandten Seite eine im wesentlichen in Umfangsrichtung (20) erstreckte Mikrorillenstruktur (10) mit ersten Rillen (12) einer ersten Tiefe (T₁) und zweiten Rillen (14) einer zweiten Tiefe (T₂) aufweist, in welche ein zwischen Gleitlager und Gleitpartner befindliches fluides hydrodynamisches Schmiermedium eindringen kann, **dadurch gekennzeichnet, dass** die Mikrorillenstruktur (10) über im wesentlichen die gesamte axiale (16) Breite und über im wesentlichen die gesamte Umfangslänge erste Rillen (12) einer ersten geringen Tiefe (T₁) von 1 - 5 µm aufweist und dass der durch die ersten Rillen (12) gebildeten Struktur zweite Rillen (14) einer maximalen Tiefe von 4 - 40 µm überlagert sind, wobei diese maximale Tiefe wenigstens 2µm größer ist als die erste Tiefe (T₁) der ersten Rillen, und dass die Tiefe (T₂) der zweiten Rillen (14) in der Umfangsrichtung (20) zwischen der maximalen Tiefe und einer Tiefe variiert, die höchstens 20 % der maximalen Tiefe beträgt.

2. Hydrodynamisches Gleitlager nach Anspruch 1, **dadurch gekennzeichnet, dass** die erste Tiefe (T₁) der ersten Rillen (12) 1 - 4 µm beträgt.

3. Hydrodynamisches Gleitlager nach Anspruch 1 oder 2, **dadurch gekennzeichnet, dass** die maximale Tiefe der zweiten Rillen (14) 4 - 30 µm, insbesondere von 4 - 20 µm, insbesondere 6 - 18 µm und weiter insbesondere 6 - 15 µm beträgt.

4. Hydrodynamisches Gleitlager nach Anspruch 1, 2 oder 3, **dadurch gekennzeichnet, dass** die erste Tiefe T₁ der ersten Rillen (12) über die Umfangsrichtung (20) konstant ist.

5. Hydrodynamisches Gleitlager nach einem oder mehreren der vorstehenden Ansprüche, **dadurch gekennzeichnet, dass** der Abstand (a) von tiefster Stelle zu tiefster Stelle von benachbarten ersten Rillen (12) 0,1 - 0,5 mm, insbesondere 0,1 - 0,4 mm, insbesondere 0,1 - 0,3 mm und weiter insbesondere 0,15 - 0,3 mm beträgt.

6. Hydrodynamisches Gleitlager nach einem oder mehreren der vorstehenden-Ansprüche, **dadurch gekennzeichnet, dass** der Abstand (c) der zweiten Rillen (14) voneinander, von tiefster Stelle zu tiefster Stelle von benachbarten zweiten Rillen (14) gemessen, 0,8 - 5 mm, insbesondere 0,8 - 4 mm, insbesondere 1 - 4 mm beträgt.

7. Hydrodynamisches Gleitlager nach einem oder mehreren der vorstehenden Ansprüche, **dadurch gekennzeichnet, dass** die maximale Breite (b) der zweiten Rillen (14) 0,3 - 1 mm beträgt.

8. Hydrodynamisches Gleitlager nach einem oder mehreren der vorstehenden Ansprüche, **dadurch gekennzeichnet, dass** die Tiefe (T₂) der zweiten Rillen (14) in der Umfangsrichtung (20) zwischen der maximalen Tiefe und einer Tiefe variiert, die höchstens 10 %, insbesondere höchstens 5 % der maximalen Tiefe beträgt.

9. Hydrodynamisches Gleitlager nach einem oder mehreren der vorstehenden Ansprüche, **dadurch gekennzeichnet, dass** die Tiefe (T₂) der zweiten Rillen (14) in der Umfangsrichtung (20) bis auf wenigstens nahezu Null abnimmt.

10. Hydrodynamisches Gleitlager nach einem oder mehreren der vorstehenden Ansprüche, **dadurch gekennzeichnet, dass** die Tiefe (T₂) der zweiten Rillen (14) in der Umfangsrichtung (20) an ein oder zwei Umfangsbereichen (28, 30) ein Minimum einnimmt.

11. Hydrodynamisches Gleitlager nach einem oder mehreren der vorstehenden Ansprüche, **dadurch gekennzeichnet, dass** derjenige Umfangsbereich (28), in dem die Tiefe (T₂) der zweiten Rillen (14) ein Minimum aufweist, in einem Hauptlastbereich des Gleitlagers liegt, in welchem ein hydrodynamisch geschmierter Spalt zwischen Gleitlager und Gleitpartner minimal ist.

12. Hydrodynamisches Gleitlager nach einem oder mehreren der vorstehenden Ansprüche, **dadurch gekennzeichnet, dass** die metallische Gleitschicht (6) eine AlSn (6-40), insbesondere eine AlSn15, AlSn20 oder AlSn25, oder eine AlZn(2-8), insbesondere AlZn5 Legierung ist.

13. Hydrodynamisches Gleitlager nach einem oder mehreren der Ansprüche 1-11, **dadurch gekennzeichnet, dass** die metallische Gleitschicht (6) eine CuSn(4-15), gegebenenfalls mit Bismut, oder eine CuZn(10-40)-Legierung ist.

14. Hydrodynamisches Gleitlager nach einem oder mehreren der vorstehenden Ansprüche, **dadurch gekennzeichnet, dass** die metallische Gleitschicht (6) mit einer galvanischen Beschichtung einer Dicke von 1 - 25 µm, insbesondere von 8 - 25 µm und weiter insbesondere von 8 - 15 µm versehen ist.

15. Hydrodynamisches Gleitlager nach einem oder mehreren der vorstehenden Ansprüche, **dadurch gekennzeichnet, dass** die metallische Gleitschicht (6) mit einer PVD-Beschichtung, insbesondere AlSn, versehen ist.

16. Hydrodynamisches Gleitlager nach einem oder mehreren der vorstehenden Ansprüche, **dadurch gekennzeichnet; dass** die metallische Gleitschicht (6) eine Polymerbeschichtung aufweist.

17. Hydrodynamisches Gleitlager nach einem oder mehreren der vorstehenden Ansprüche, **dadurch** hergestellt, dass das Gleitlager zur Herstellung der ersten Rillen (12) einer ersten spindelnden Bearbeitung unterzogen wird, wobei eine eine Werkzeugschneide tragende Bohrstange in einer axialen (16) Längsmittelachse des Gleitlagers (z-Achse) bewegt wird, und dass zur Herstellung der zweiten Rillen (14) die Bohrstange senkrecht zur Längsmittelachse um die maximale Tiefe der zweiten Rillen verstellt wird und das Gleitlager sodann in dieser Stellung der Bohrstange einer zweiten spindelnden Bearbeitung unterzogen wird.

18. Hydrodynamisch mediengeschmierte Lagerstelle umfassend ein Gleitlager nach einem oder mehreren der vorstehenden Ansprüche und einen wellenförmigen Gleitpartner, wobei das Gleitlager den wellenförmigen Gleitpartner (40) im wesentlichen konzentrisch umgibt.

## Claims

1. Hydrodynamic plain bearing as a bearing bush or bearing shell (2), with a metallic carrier layer (4), in particular of steel, and a metallic liner (6) on the side of the carrier layer facing the sliding partner, whereby the liner (6) on the side facing away from the carrier layer (4) and facing the sliding partner has a microgroove structure (10) essentially aligned with the circumferential direction (20) with first grooves (12) of a first depth (T₁) and second grooves (14) of a second depth (T₂), in which a fluid hydrodynamic lubricating medium between the plain bearing and the sliding partner can ingress, **characterised in that** the microgroove structure (10) over essentially the entire axial (16) width and over essentially the entire circumferential length comprises first grooves (12) of a first minor depth (T₁) of 1 - 5 µm and that on the structure formed by the first grooves (12) second grooves (14) are superimposed with a maximum depth of 4 - 40 µm, whereby this maximum depth is at least 2 µm greater than the first depth (T₁) of the first grooves, and that the depth (T₂) of the second grooves (14) in the circumferential direction (20) varies between the maximum depth and a depth, which is at most 20% of the maximum depth.

2. Plain bearing according to claim 1, **characterised in that** the first depth (T1) of the first grooves (12) is 1 - 4 µm.

3. Plain bearing according to claim 1 or 2, **characterised in that** the maximum depth of the second grooves (14) is 4 - 30 µm, in particular 4 - 20 µm, in particular 6 - 18 µm and further, in particular 6 - 15 µm.

4. Plain bearing according to claim 1, 2 or 3, **characterised in that** the first depth T₁ of the first grooves (12) is constant over the circumferential direction (20).

5. Plain bearing according to one or more of the preceding claims, **characterised in that** the distance (a) from the deepest position to the deepest position of the neighbouring first grooves (12) is 0.1 - 0.5 mm, in particular 0.1 - 0.4 mm, in particular 0.1 - 0.3 mm and further, in particular 0.15 - 0.3 mm.

6. Plain bearing according to one or more of the preceding claims, **characterised in that** the separation (c) of the second grooves (14) from each other, measured from the deepest position to the deepest position of the neighbouring second grooves (14), is 0.8 - 5 mm, in particular 0.8 - 4 mm, in particular 1 - 4 mm.

7. Plain bearing according to one or more of the preceding claims, **characterised in that** the maximum width (b) of the second grooves (14) is 0.3 - 1 mm.

8. Plain bearing according to one or more of the preceding claims, **characterised in that** the depth (T₂) of the second grooves (14) varies in the circumferential direction (20) between the maximum depth and a depth, which is at most 10% and, in particular, at most 5% of the maximum depth.

9. Plain bearing according to one or more of the preceding claims, **characterised in that** the depth (T₂) of the second grooves (14) reduces in the circumferential direction (20) down to almost zero.

10. Plain bearing according to one or more of the preceding claims, **characterised in that** the depth (T₂) of the second grooves (14) has a minimum value in the circumferential direction (20) in one or two circumferential areas (28, 30).

11. Plain bearing according to one or more of the preceding claims, **characterised in that** the area of the circumference (28), in which the depth (T₂) of the second grooves (14) is a minimum, lies in a main area of loading of the plain bearing, in which a hydrodynamically lubricated slot between the plain bearing and the sliding partner is minimal.

12. Hydrodynamic plain bearing according to one or more of the preceding claims, **characterised in that** the metallic liner (6) is an AlSn (6-40), in particular an AlSn15, AlSn20 or AlSn25, or an AlZn (2-8) alloy, in particular an AlZn5 alloy.

13. Hydrodynamic plain bearing according to one or more of the preceding claims 1-11, **characterised in that** the metallic liner (6) is a CuSn (4-15) alloy, if necessary with bismuth, or a CuZn (10-40) alloy.

14. Hydrodynamic plain bearing according to one or more of the preceding claims, **characterised in that** the metallic liner (6) is provided with a galvanic coating to a thickness of 1 - 25 µm, in particular of thickness 8 - 25 µm and, further, in particular a thickness of 8 - 15 µm.

15. Hydrodynamic plain bearing according to one or more of the preceding claims, **characterised in that** the metallic liner (6) is provided with a PVD coating, in particular AlSn.

16. Hydrodynamic plain bearing according to one or more of the preceding claims, **characterised in that** the metallic liner (6) is provided with a polymer coating.

17. Hydrodynamic plain bearing according to one or more of the preceding claims, manufactured in such a way that in producing the first grooves (12) the plain bearing is subjected to an initial machining, in which a boring bar carrying the lip of a tool is moved on a central longitudinal axis (16) (z axis) of the plain bearing, and that to manufacture the second grooves (14) the boring bar is adjusted at right angles to the central longitudinal axis to the maximum depth of the second grooves and the plain bearing is then subjected in this setting of the boring bar to a second turning operation.

18. Hydrodynamic media-lubricated bearing comprising a plain bearing in accordance with one or more of the preceding claims and a shaft-type sliding partner, in which the plain bearing essentially surrounds the shaft-type sliding partner (40) concentrically.

## Revendications

1. Palier lisse hydrodynamique faisant office de coussinet ou de coquille de coussinet (2), avec une couche support métallique (4), notamment en acier, et une couche de glissement métallique (6) rapportée sur la face de la couche support en regard de l'élément de glissement antagoniste, la couche de glissement (6) présentant, sur sa face opposée à la couche support (4) et en regard de l'élément de glissement antagoniste, une structure microrainurée (10) s'étendant sensiblement dans la direction circonférentielle (20) avec des premières rainures (12) d'une première profondeur (T₁) et des secondes rainures (14) d'une seconde profondeur (T₂), structure dans laquelle peut pénétrer un agent de lubrification hydrodynamique fluide présent entre le palier lisse et l'élément de glissement antagoniste, **caractérisé en ce que** la structure microrainurée (10) présente, sur sensiblement toute la largeur axiale (16) et sensiblement toute la circonférence, des premières rainures (12) d'une première profondeur (T₁), faible, comprise entre 1 et 5 µm et **en ce qu'**à la structure formée par les premières rainures (12) sont superposées des secondes rainures (14) d'une profondeur maximale comprise entre 4 et 40 µm, ladite profondeur maximale étant au moins 2 µm supérieure à la première profondeur (T₁) des premières rainures, et **en ce que** la profondeur (T₂) des secondes rainures (14) varie dans la direction circonférentielle (20) entre la profondeur maximale et une profondeur inférieure ou égale à 20 % de la profondeur maximale.

2. Palier lisse hydrodynamique selon la revendication 1, **caractérisé en ce que** la première profondeur (T₁) des premières rainures (12) est comprise entre 1 et 4 µm.

3. Palier lisse hydrodynamique selon la revendication 1 ou la revendication 2, **caractérisé en ce que** la profondeur maximale des secondes rainures (14) est comprise entre 4 et 30 µm, en particulier entre 4 et 20 µm, notamment entre 6 et 18 µm et notamment encore entre 6 et 15 µm.

4. Palier lisse hydrodynamique selon l'une des revendications 1, 2 ou 3, **caractérisé en ce que** la première profondeur T₁ des premières rainures (12) est constante dans la direction circonférentielle (20).

5. Palier lisse hydrodynamique selon une ou plusieurs des revendications précédentes, **caractérisé en ce que** la distance (a) entre le point le plus profond d'une rainure (12) et le point le plus profond d'une rainure voisine (12) est compris entre 0,1 et 0,5 mm, en particulier entre 0,1 et 0,4 mm, notamment entre 0,1 et 0,3 mm et notamment encore entre 0,15 et 0,3 mm.

6. Palier lisse hydrodynamique selon une ou plusieurs des revendications précédentes, **caractérisé en ce que** la distance (c) entre deux des secondes rainures (14), mesurée entre le point le plus profond d'une rainure (14) et le point le plus profond d'une seconde rainure voisine (14), est comprise entre 0,8 et 5 mm, en particulier entre 0,8 et 4 mm, notamment entre 1 et 4 mm.

7. Palier lisse hydrodynamique selon une ou plusieurs des revendications précédentes, **caractérisé en ce que** la largeur maximale (b) des secondes rainures (14) est comprise entre 0,3 et 1 mm.

8. Palier lisse hydrodynamique selon une ou plusieurs des revendications précédentes, **caractérisé en ce que** la profondeur (T₂) des secondes rainures (14) varie dans la direction circonférentielle (20) entre la profondeur maximale et une profondeur inférieure ou égale à 10 %, notamment à 5%, de la profondeur maximale.

9. Palier lisse hydrodynamique selon une ou plusieurs des revendications précédentes, **caractérisé en ce que** la profondeur (T₂) des secondes rainures (14) diminue dans la direction circonférentielle (20) jusqu'à une valeur au moins sensiblement nulle.

10. Palier lisse hydrodynamique selon une ou plusieurs des revendications précédentes, **caractérisé en ce que** la profondeur (T₂) des secondes rainures (14) est minimale au niveau d'une ou deux portions (28, 30) de la circonférence (20).

11. Palier lisse hydrodynamique selon une ou plusieurs des revendications précédentes, **caractérisé en ce que** la portion de circonférence (28) au niveau de laquelle la profondeur (T₂) des secondes rainures (14) est minimale se trouve dans une région du palier lisse qui est soumise à la charge principale et au niveau de laquelle l'interstice de lubrification hydrodynamique entre le palier lisse et l'élément de glissement antagoniste est minimal.

12. Palier lisse hydrodynamique selon une ou plusieurs des revendications précédentes, **caractérisé en ce que** la couche de glissement métallique (6) est en un alliage AlSn(6 à 40), notamment un alliage AlSn15, AlSn20 ou AlSn25 ou un alliage AlZn(2 à 8), notamment un alliage AlZn5.

13. Palier lisse hydrodynamique selon une ou plusieurs des revendications 1 à 11, **caractérisé en ce que** la couche de glissement métallique (6) est en un alliage CuSn(4 à 15), éventuellement avec du bismuth, ou en un alliage CuZn(10 à 40).

14. Palier lisse hydrodynamique selon une ou plusieurs des revendications précédentes, **caractérisé en ce que** la couche de glissement métallique (6) est pourvue d'un revêtement galvanique d'une épaisseur comprise entre 1 et 25 µm, en particulier entre 8 et 25 µm et notamment entre 8 et 15 µm.

15. Palier lisse hydrodynamique selon une ou plusieurs des revendications précédentes, **caractérisé en ce que** la couche de glissement métallique (6) est pourvue d'un revêtement, notamment d'AlSn, appliqué par dépôt physique en phase gazeuse.

16. Palier lisse hydrodynamique selon une ou plusieurs des revendications précédentes, **caractérisé en ce que** la couche de glissement métallique (6) présente un revêtement polymère.

17. Palier lisse hydrodynamique selon une ou plusieurs des revendications précédentes, selon le procédé de fabrication duquel ledit palier lisse est soumis à un premier usinage à la broche pour réaliser les premières rainures (12), une barre d'alésage supportant un tranchant d'outil étant déplacée selon un axe longitudinal médian (16) du palier lisse (axe z), en ce que pour réaliser les secondes rainures (14), la barre d'alésage est déplacée perpendiculairement à l'axe longitudinal médian sur une distance équivalant à la profondeur maximale des secondes rainures et en ce que le palier lisse est ensuite soumis, dans cette position de la barre d'alésage, à un second usinage à la broche.

18. Point d'appui à lubrification hydrodynamique contenant un palier lisse selon une ou plusieurs des revendications précédentes et un élément de glissement antagoniste ondulé, dans lequel le palier lisse entoure l'élément de glissement antagoniste ondulé (40) de manière sensiblement concentrique.
